## Europäisches Patentamt
## European Patent Office
## Office européen des brevets

(11) Publication number: **0 116 761**
**B1**

(12) **EUROPEAN PATENT SPECIFICATION**

(45) Date of publication of patent specification: **24.05.89**  (51) Int. Cl.⁴: **G 06 F 15/40**

(21) Application number: **83307479.2**

(22) Date of filing: **08.12.83**

(54) **Computer memory device for storing associations between data items.**

(30) Priority: **18.12.82 GB 8236084**

(43) Date of publication of application:
**29.08.84 Bulletin 84/35**

(45) Publication of the grant of the patent:
**24.05.89 Bulletin 89/21**

(84) Designated Contracting States:
**AT BE CH DE FR GB IT LI LU NL SE**

(56) References cited:

**COMMUNICATIONS OF THE ACM, vol. 23, no.
12, December 1980, Pages 703-710, New York,
US; H. SAMET: "Deletion in two-dimensional
quad trees"**

(73) Proprietor: **University of Strathclyde
Royal College 204 George Street
Glasgow G1 1XW (GB)**

(72) Inventor: **McGregor, Douglas Robert
33 Cartsbridge Road
Clarkston Glasgow Scotland (GB)**
Inventor: **Malone, Jon Ross
1 Rosslyn Terrace
Glasgow Scotland Gl (GB)**

(74) Representative: **MacDougall, Donald Carmichael
et al
Messrs. Cruikshank & Fairweather 19 Royal
Exchange Square
Glasgow G1 3AE, Scotland (GB)**

Courier Press, Leamington Spa, England.

## Description

This invention relates to computer memory devices.

Computer memory devices are conventionally provided to store information which is capable of being retrieved on demand. Conventionally the information comprises large data collections only some items of which are sought to be retrieved at any particular demand. The problem with conventionally-organised computer memory devices is the relatively long time taken to identify the items of interest from the complete data collection at each demand. Furthermore in many large data collections items are indexed as forming a member of one or more sets and data retrieval from large collection is effected by the operator or user demanding retrieval of all data items forming one or more sets. Retrieval of all items of interest is therefore dependent upon correct allocation of each item to every possible relevant set in the initial indexing and is also dependent upon the user correctly identifying all possible sets of interest at each demand. In practice incomplete data recall results.

In principle the latter problem can be overcome by storing a thesaurus of sets which is used initially when entering a data item for storage so that the time is correctly indexed under every possible relevant set and secondly is used at each particular demand to identify every possible relevant set from which to retrieve data items. However in practice such an arrangement would be considered wholly uneconomic due to the exceedingly large data storage volume required. This arises because in even the simplest data collections there exist many associations between the data items so that the number of sets which can be identified within the data collection is correspondingly large.

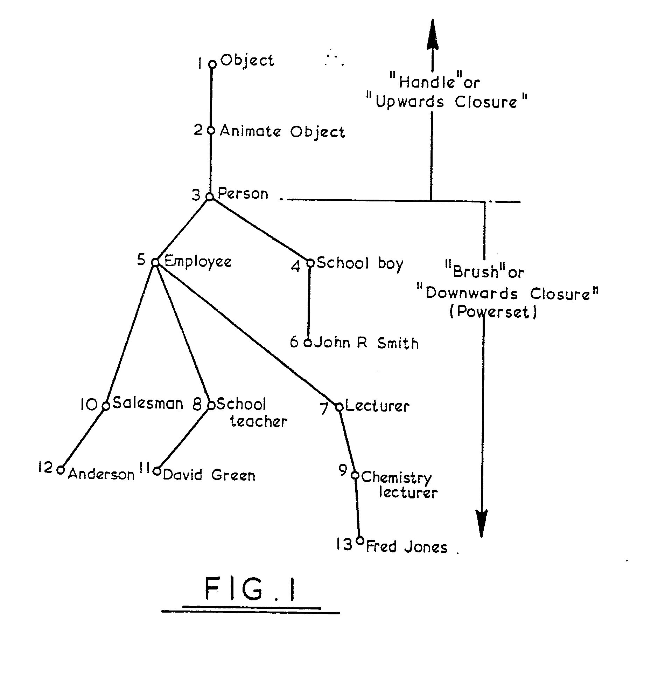

By way of illustration Fig. 1 shows a very simple data collection with the data items arranged in set order so as to identify the associations and interrelationships between data items.

The data collection consists of the data items: object, animate object, person, employee, salesman, Anderson, schoolteacher, David Green, Lecturer, chemistry lecturer, Fred Jones, school-boy, J. R. Smith and by way of example the set for 'Lecturer' consists of 'chemistry lecturer' and Fred Jones. However 'Lecturer' is a member of the set of 'employee' and in turn 'employee' is a member of the set of 'person', etc.

The problem is to provide a memory device in which the various items of the data collection can be stored and which in response to the query to identify all 'Lecturers' will recall 'chemistry lecturer' and 'Fred Jones' and at the same time can identify that 'Lecturer' is a member of the sets of 'employee', 'person', 'animate object' and 'object' so that the user can if necessary redirect his equiry to recall all members of the set of 'employee' etc.

Although the foregoing description refers to sets of data items this is not the only natural form of association between data item found in data collections. For example, data items may have a causal relationship which is a different form of association.

According to the present invention there is provided a computer memory device for storing identified associations between data items of a data collection, said device being characterised by the combination of

an array of signal-flow pathways, which pathways are respectively representative of data items of said data collection,

controllable interconnect means for selectively interconnecting said pathways in one or more pairs and effecting directional control of signal flow between each interconnected pair in accordance with the identified associations between the respectively represented data items of said data collection,

and signal input/output means connected to said array for delivering an input signal to a selected pathway representative of a selected data item and for receiving output signals from the pathways interconnected therewith and representative of the data items of said data collection which have identified associations with said selected data item.

Preferably each pathway of said array is interconnectable with each other pathway by means of a said controllable interconnect means. It will therefore be appreciated that merely because a pair of pathways are interconnected this does not mean that each pathway of the pair cannot also be interconnected with one or more other pathways in order to form various other 'pairs' of interconnected pathways.

Preferably each controllable interconnect means is operable selectively to effect control of signal flow between interconnected pathways either unidirectionally in one of two opposed directions or bidirectionally.

It will be understood that the status of a controllable interconnect means effectively represents the identified association between the two data items represented by the two pertaining signal flow pathways so that if the interconnect means is controlled to prevent interconnection between the pathways this is representative of an absence of association between the pertaining data items; bidirectional interconnection is representative of the data items being aliases (or synonyms) and unidirectional interconnection is representative of one data item being, for example, a set member of the other data item according to the unidirectional signal flow direction.

Preferably each controllable interconnect means is operable in any one of a plurality of states which states are equal in number to the different associations which are possible between two data items and the status of each said interconnect means is controlled by a multi-state control device having an equal number of alternative states, said control device forming part of a conventional computer memory and being individually addressable therein by operator action in order to establish the control device in a desired state and accordingly to establish the interconnect means in the corresponding state. Conveniently each interconnect means is 4 state and each control device is formed by a pair of bistate memory elements in a conventional random access memory (RAM).

Alternatively, each controllable interconnect means is operable in any one of a plurality of states which states are less in number than the different associations which are possible between two data items and the status of each said interconnect means is controlled by a multi-state control device having an equal number of alternative states to those of the interconnect means, said control device forming part of a conventional computer memory and being individually addressable therein by operator action in order to establish the control device in a desired state and accordingly to establish the interconnect means in a corresponding state, the associations between two data items which are unobtainable by operation of the interconnect means being provided by software control of the data items. Conveniently there are four different possible associations of which the association of identity or synonymous or alias is provided by software control of the data items and the remaining three associations are provided by a 3 state interconnect means actuated by a known 3-state memory element of a random access memory (RAM).

Embodiments of the present invention will now be described by way of example with reference to the accompanying drawings, in which:

Fig. 1 illustrates a data collection and the associations between data items of the collection;

Fig. 2 schematically illustrates a preferred form of computer memory device according to the present invention in association with peripheral components which operate the device;

Fig. 3 illustrates alternative forms of a detail of the device of Fig. 2;

Fig. 4 schematically illustrates a detail of the Fig. 2 device dedicated to a particular use;

Fig. 5 illustrates a different implementation of computer memory device according to the present invention;

Fig. 6 illustrates a preferred form of a detail of a computer memory device according to the present invention;

Fig. 7 illustrates the Fig. 6 detail in a practical computer memory device according to the present invention;

Fig. 8 illustrates an arrangement of interconnecting a plurality of computer memory devices according to the present invention in order to increase storage capacity; and

Fig. 9 illustrates a preferred interconnection arrangement of a plurality of computer memory devices according to the present invention in order to increase storage capacity.

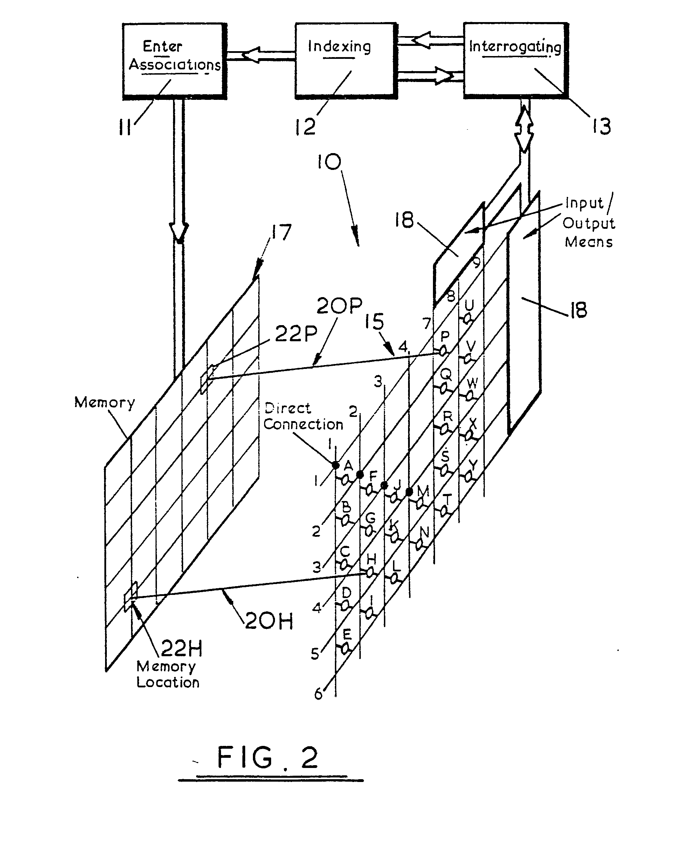

As is shown in Fig. 2 the memory device 10 is associated with component 11 which permits identified associations to be entered, component 12 which establishes an index of data items correlated with the pathways of the device 10, and an interrogation component 13 whereby the device 10 may be provided with input signals and output signals may be extracted from device 10.

Device 10 comprises an array 15 of unique conductors numbered 1—9 the geometry of which need not be as illustrated in Fig. 2, it being understood that the Fig. 2 geometry is provided merely to permit clarity of explanation. Thus in Fig. 2 conductors 1 to 4 are each of cruciform shape in effect being individually formed by orthogonal sub-conductors which are directly connected at the cross-over. Conductors 5 to 9 are linear. The conductors 1—9 are associated with controllable interconnect means respectively identified by the letters A—N and P—Y (there is no 'O' in the interests of clarity) so that for example conductor 1 is directly linkable to:

conductor 2 by interconnect means A
conductor 3 by interconnect means B
conductor 4 by interconnect means C
conductor 5 by interconnect means D
conductor 6 by interconnect means E

and conductor 2 is directly linkable to:

conductor 1 by interconnect means A
conductor 3 by interconnect means F
conductor 4 by interconnect means G
conductor 5 by interconnect means H
conductor 6 by interconnect means I
conductor 7 by interconnect means P
conductor 8 by interconnect means U

The individual interconnect means A—Y are controllable by signals delivered over respective status channels 20A, 20B . . . 20Y (only some of which are shown in the interests of clarity) from respective control devices 22A, 22B . . . 22Y which form part of a memory 17 which is addressable by component 11. Input signals are delivered to the conductors 1—9 of the array 15 by an input/output means 18 which is under the control of component 13. Output signals from the array 15 are received by the means 18 and delivered to component 13.

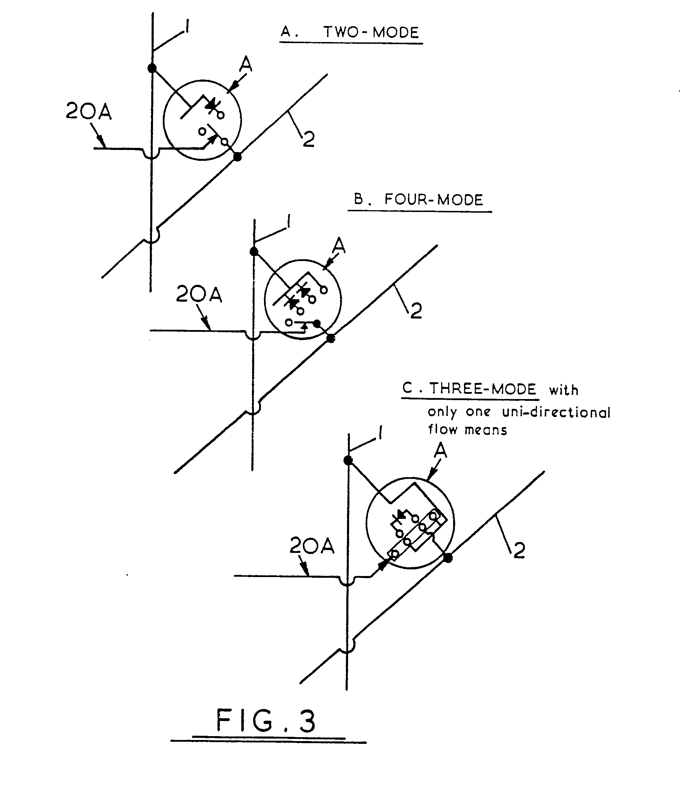

Fig. 3 illustrates 3 possible implementations of a controllable interconnect means. Thus in Fig. 3A conductors 1 and 2 are linkable by interconnect means A which comprises a diode and a two-position switch such that means A either effects a disconnection between conductors 1 and 2 or an interconnection with unidirectional current flow from conductor 1 to conductor 2. In Fig. 3B the means A is four-mode as will be evident. In Fig. 3C the means A is three-mode incorporating a single diode which provides alternative flow polarities from a three position switch. As has been explained because the Fig. 3A implementation is two-mode control device 22A need only be two-mode and can therefore be implemented by a single memory location in a conventional RAM 17. Because the Fig. 3B implementation is four-mode control device 22A may be implemented by a pair of memory locations in a RAM 17 and likewise for the Fig. 3C implementation. Alternatively for Fig. 3C device 22A may be implemented by a single memory location in a tri-state memory. It will be understood that the bidirectional control of flow between the Fig. 3C conductors is effected, if required, by software control in the indexing component 12.

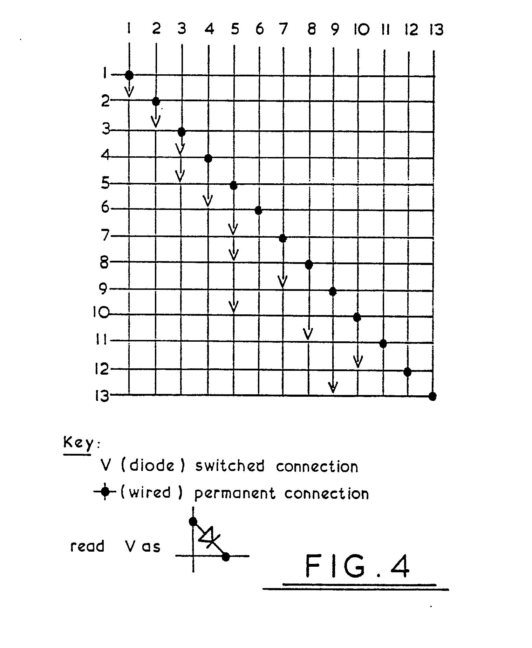

The method of operation of the device 10 will now be described with respect to the Fig. 1 data collection which because it has thirteen data items is implemented conveniently in a 13×13 array of sub conductors forming 13 conductors each of the cruciform type. The items of the collection are entered into the indexing component 12 (Fig. 2) and allocated conductor numbers as identified in Fig. 1. The nature of each association between data items is then entered into component 11 which then loads the pertaining memory locations of memory 17 to the required state. For example 'Animate Object' (number 2) is a sub-set of 'Object' (number 1) so that device 22A of memory 17 is loaded to set controllable interconnect means A whereby signal current applied to conductor 1 will flow to conductor 2. This loading of the memory 17 is effected until all associations have been entered and the conductor array 15 has the form shown in Fig. 4. In detail the interconnect means linking conductors 1 to 2; 2 to 3; 3 to 4; 3 to 5; 4 to 6; 5 to 7; 5 to 8; 5 to 10; 7 to 9; 8 to 11; 9 to 13; and 10 to 12 are each set to interconnect the pair of conductors with unidirectional current flow from the first identified conductor to the second identified conductor. All other interconnect means are set to the disconnected state. The selection of direction of the unidirectional current flow between conductors is based upon the premise that a positive potential is applied as a signal input to provide a 'downwards closure' on a selected data item of the collection whereas a negative potential is applied as a signal input to provide an 'upwards closure'.

By way of example if the operators query is to find the Downwards Closure (or Brush) of 'Employee' the interrogation component 13 (Fig. 2) applies a positive voltage signal to conductor 5 and the resulting output signals are established on conductors 5, 7, 8, 9, 10, 11, 12 and 13. These output signals are identified by component 13 which in conjunction with indexing component 12 delivers to the operator the answer 'Employee', 'Lecturer', 'school teacher', 'chemistry lecturer', 'salesman', 'David Green', 'Anderson' and 'Fred Jones'. Likewise if the operator's query is to find the Upwards Closure (or Handle) of 'Employee' the interrogation component 13 applies a negative voltage signal to conductor 5 and the resulting output signals are established on conductors 5, 3, 2, 1 which are identified to the operator as 'Employee', 'Person', 'Animate Object', 'Object'.

By way of further example if the operator's query is to identify all data items in the Downward Closures (or Brushes) of the two terms 'Employee' and 'schoolboy' this would be established by interrogation component 13 simultaneously establishing positive voltage signals on conductors 4 and 5 which would result in positive output signals appearing on conductors 4, 5, 6, 7, 8, 9, 10, 11, 12 and 13.

For queries involving the union of a Handle and a Brush, simultaneous application of positive and negative potentials is not possible, since this may result in the connection of a positive potential to a negative potential. However, such queries may be answered by the interrogation component 13 which firstly causes to be applied only the potential of the polarity corresponding to Handle or Brush, and identifies the conductors on which the same potential polarity is sensed, and subsequently causes application only of the potential of the other polarity, corresponding to Brush and Handle, and identifies the conductors on which that other potential polarity is sensed, the two lists of identified conductors being combined by the component 13 to provide the answer to the query.

In order to deal with queries involving intersections of Handles and/or Brushes, this can be done in a manner analogous to the answering of queries concerning union of a Handle and a Brush, whereby the interrogating component 13 compiles separate lists of relevant Handles and/or Brushes by sequential answering of appropriate sub-queries, and then makes comparison of these lists and selects those identified conductors which are common to the lists, and answers the original query as the corresponding items.

It will be appreciated from the foregoing that the device 10 is extremely powerful in that its speed of response to a query is very fast compared with prior art arrangements and it is sufficiently flexible to be able to answer complex queries of Boolean type—e.g. unions and intersections.

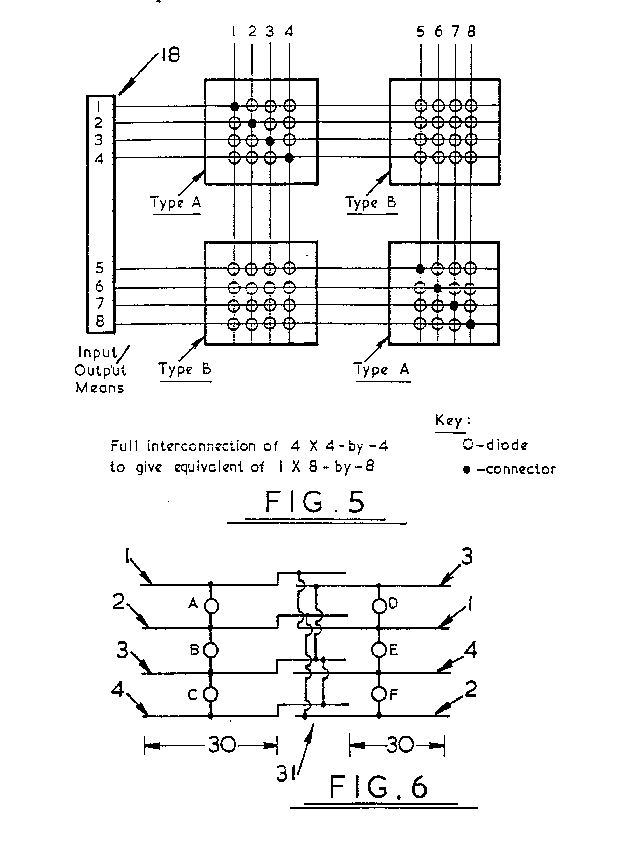

Since it is generally accepted that practically all data collections incorporate a significant number of data items with no mutual association it may be possible, as is exemplified by the Fig. 2 device, to provide some signal pathways which do not have an interconnect means with a number of the other signal pathways. Also, large capacity memory devices in accordance with the present invention may conveniently be constructed as a combination of several smaller capacity memory devices and one example of thus is illustrated in Fig. 5. In Fig. 5 there are two type A devices each having four conductors in cruciform and two type B devices each having eight conductors which are linear.

Fig. 6 illustrates a preferred geometry of a small conductor array of the device 10 according to the present invention and which when expanded to a multitude of conductors is suitable for very large scale integrated construction. In this device the individual conductors 1—4 are arranged in fields 30 and at the edge of each field 30 the numerical order of the conductors is made different by cross-connecting conductors 31. Any one conductor is linkable to any other conductor by the aforesaid interconnect means A, B, C, etc. which are located within the appropriate fields 30.

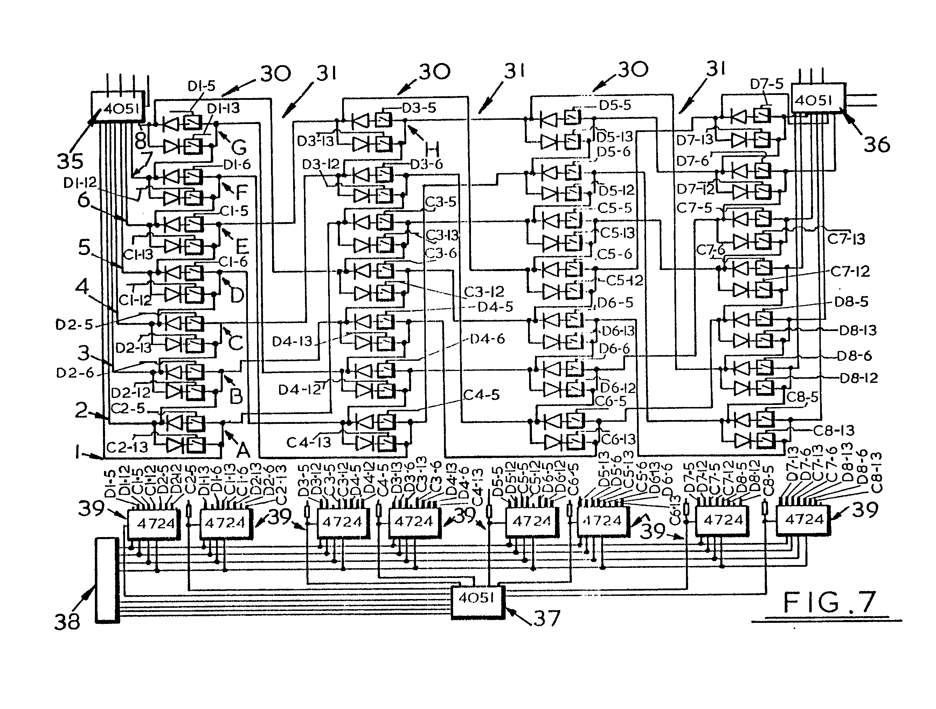

A practical format of the Fig. 6 arrangement is illustrated in the device 10 of Fig. 7, where the input/output means 18 of Fig. 2 is replaced by input device 35 and output device 36, the entering component 11 is formed by component 37, and driver component 38, the memory 17 is formed by individual memory components 39, the signal pathway conductors are identified as 1, 2, 3, ... 8 and the interconnect means A, B, C, ... etc. are individually identified in part only in the interests of clarity. (It will be recognized that the mutual connection of specific conductors by specific interconnect means in the Fig. 7 arrangement may not correspond numerically and alphabetically to that of Fig. 2).

Although each interconnect means has been functionally described as being multi-mode it will be evident that each means may be implemented as a collection of single mode devices.

The present invention provides numerous advantages over the prior art some of which have been previously explained. Additionally however an important advantage of the device when implemented in VLSI technology and RAM memory is that a localised malfunction does not necessarily lead to inoperability of the entire device because, following diagnosis of the malfunction location the required function can be transferred to anolher location of the array by suitable instruction to the indexing component 12 and re-entering the relevant associations via the entering component 11.

In considering known data collections it has been established that not every data item is associated with every other data item. Initially as the data collection is amassed there by be relatively few associations between data items, but these associations will grow in number as the data collection becomes enlarged. There is therefore a need to combine a number of memory devices 10 in accordance with the present invention which will enable more and more of these devices 10 to be used as the data collection enlarges. Fig. 5 illustrates one such form of combining the devices 10 but it may be wasteful of memory capacity in that it is capable of interconnecting every conductor with every other conductor. The format of the Fig. 2 memory device may also be used for capacity enlargement in that conductors 7 and 8 in Fig. 2 may be interconnected by dedicated use of conductor 5 but this arrangement is also wasteful of capacity in that conductor 5 becomes unavailable for the purposes of representing a data item.

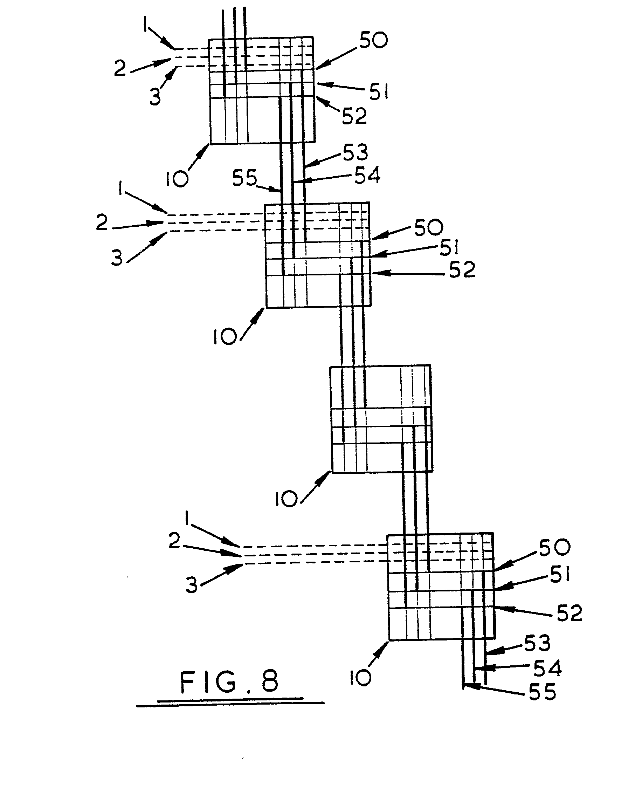

The arrangement of Fig. 8 illustrates a practical way of interconnecting several devices 10 which is achieved by providing in each device 10 a series of designated conductors 50, 51, 52 which are switchably connected to conductors 53, 54, 55, respectively to provide a so-called "daisy chain". The conductors 1, 2, 3, etc. within each device 10 which are capable of representing data items as previously discussed are connected to the designated conductors 50, 51, 52 by means of controllable interconnect means as previously discussed. It will be appreciated that although any signal pathway conductor 1, 2, 3 etc. may be connected to any other when the data collection is entered, the Fig. 8 arrangement is such that some entered associations will prevent the subsequent entry of other associations because the individual devices 10 are connected serially and therefore an interconnection between, for example, a signal pathway conductor in a first device 10 and a signal pathway conductor in a last device 10 uses up conductors within each of the intervening devices 10 in the daisy chain.

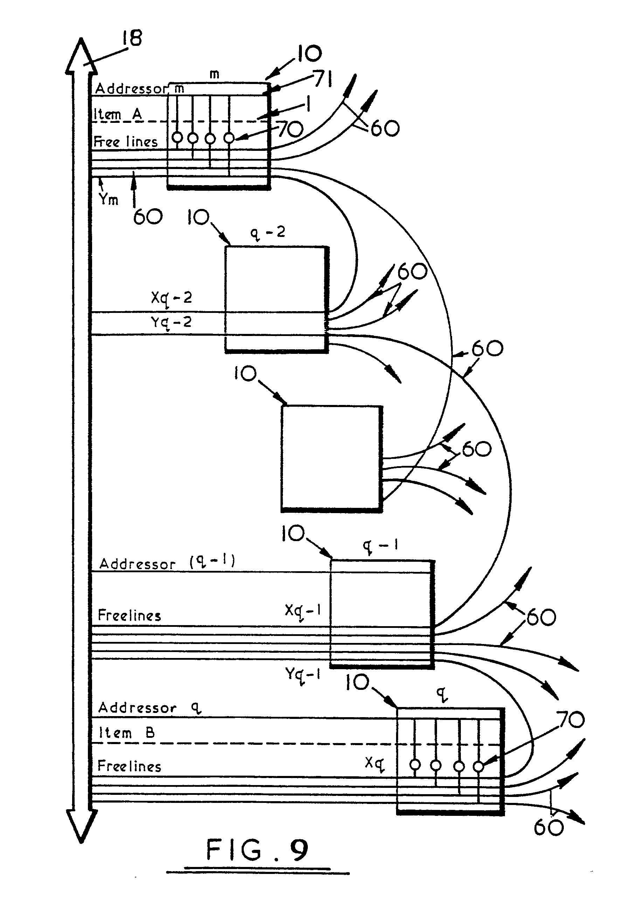

Fig. 9 illustrates the preferred arrangement for interconnecting a number of devices 10. In Fig. 9 each device 10 has a number of its conductors designated 'free line' conductors 60 these being externally connected with one one 'free line' conductor 60 of another device 10. The distribution of these connections between devices 10 is random and selection of the random distribution is determined at the manufacturing stage in accordance with known distribution theories. In each device 10 each free line 60 is connectable by an interconnect means 70 with a dedicated addressor conductor 71 and each free line 60 is connectable to each other within the same device 10 by the interconnect means previously described because each free line 60 and the addressor conductor 71 is one of the signal pathway conductors 1, 2, 3, etc. previously discussed. Only one other such conductor is illustrated in the device 10 m of Fig. 9 in the interests of clarity. Initially, the free lines 60 are bidirectionally connected to each other and to the addressor conductor 71 in respective devices 10.

In the Fig. 9 arrangement each interconnect means incorporates a voltage drop device providing a preset level of voltage drop when an electrical signal is transmitted therethrough either bidirectionally or unidirectionally. This voltage drop is conveniently provided by a single diode which, for example, provides a 0.6 volts drop.

By way of example of the operation of the Fig. 9 arrangement if it is desired to represent an association between two data items respectively represented by the conductors designated item A and item B which are in devices 10m and 10q a voltage of predetermined level is established on addressor line m whilst the voltage level of addressor line q is monitored. The voltage level is initially set slightly larger than twice but less than three times the voltage drop of a single diode and is referred to as a "brush level 2" operation. If no direct connection exists between device 10m and device 10q then no voltage will be sensed on addressor line q. If an available direct connection exits then a small voltage will be sensed on addressor line q (being the applied voltage level minus the voltage drop of a single interconnect means 70 in device 10m minus the voltage drop of a single interconnect means 70 in device 10q). Having thus determined the presence of at least one available direct connection between devices 10m and 10q it is necessary to identify which of the free lines 60 in device 10m and which of the free lines 60 in device 10q provide one such path;

to disconnect the identified free lines from the pertaining addressor line m, q and from the other free lines by means of the pertaining interconnect means 70 and to connect the item A line to the relevant free line 60 in device 10m and the item B line in device 10q to the relevant free line 60 in device 10q.

This identification is achieved by applying to addressor line m a brush level 1 voltage (i.e. a voltage slightly greater than a single diode voltage drop but less than the voltage drop of two diodes) and by monitoring each of the conductors in device 10q there are identified the free lines 60 in device 10q which are connected directly with device 10m. One such free line 60 in device 10q is selected. A brush level 0 voltage (i.e. less than one diode voltage drop) is then applied to the selected free line 60 in device 10q to identify the free line 60 in device 10m.

In general, it may be necessary to establish higher brush level voltages on addressor line m in order to identify a signal pathway to addressor line q if there is an indirect available connection between two of the free lines 60 in devices 10m and 10q. By indirect we mean that the applied signal is transmitted through one or more intervening devices 10 such as device 10(q−2) and device 10(q−1) prior to reaching device 10q in each of which intervening devices 10 there will be further diode voltage drops. Accordingly, unit steps of brush voltage level are applied up to a maximum relevant brush level. This establishes the minimum number of intervening devices 10 involved in routing the required association between devices 10m and 10q.

If routes are established at a brugh voltage level n then an actual route is identified by applying a brush voltage level of (n−1) on addressor line m and noting the identity of the free lines 60 in device 10q on which a voltage is sensed. One of these free lines 60 in device 10q is selected as, say, Xq, and is disconnected from the addressor line q and from the other free lines 60 in device 10q. A brush voltage level zero is then applied to line Xq which accordingly indicates in a device 10, denoted device 10(q−1), the directly connected free line 60 which is denoted line Y(q−1) and this is then disconnected from addressor line (q−1) and from the other free lines 60 in device 10(q−1). A brush voltage level (n−2) is then applied to addressor line m and the resulting free lines 60 in device 10(q−1) identified. One is denoted X(q−1) and this is disconnected from addressor line (q−1) and from the other free lines 60 in device 10(q−1) in the same manner as for line Xq whereafter the corresponding procedure is repeated until Ym is identified and disconnected etc.

Finally, the interconnect means A, B, C, etc. between each line Xi and its corresponding line Yi is put in its bidirectional flow status and the conductor corresponding to item A in device 10m is connected to the line Ym in device 10m whilst the conductor corresponding to item B in device 10q is connected to the line Xq in device 10q, one of these two latter connections being effected to represent the desired nature of the association between items A and B and the other connection permitting signal flow at least in the same direction. Of course alternative combinations of the statuses of the interconnect means A, B, C, etc. could be used to provide the required association.

It will be appreciated from the foregoing that in the Fig. 9 arrangement once any two free lines 60 have been interconnected in order to establish the desired association between two items of the data collection these free lines 60 are no longer connected to the relevant addressor line nor to any of the remaining free lines 60 within the relevant device 10 and therefore cease to be 'free lines'. Furthermore, the identified procedure in the Fig. 9 arrangement utilises the unique inherent properties of each device 10 and enables rapid interrogation of the entire memory to identify all currently available routes for establishing associations between data items.

It will be understood that the identified procedure involves providing the intersection of various sets of identified conductors and only one method of achieving this has been described in detail. However there are a number of alternative methods of solving this problem using a brush or handle voltage level technique.

Ultimately with the foregoing procedure in the Fig. 9 arrangement a situation may be reached where a realisable route between two particular devices 10 no longer exists. This does not imply that the complete memory is saturated because there may be numerous other relisable routes if one of the end point devices 10 is altered. This of course can be done by way of the indexing component 12 to establish, for example, item A on conductor 3 of device 10(q−2) as well as on conductor 1 of device 10m. It would then be necessary to identify if possible a route between device 10(q−2) and device 10q. Conductor 1 in device 10m would then be indexed as an alias of conductor 3 in device 10(q−2) in the indexing component 12.

The arrangement described in Fig. 9 together with the method of operation thereof rapidly establishes the functionally shortest available route between any two of the devices 10 which is a particular advantage for handling very large data collections.

The interrogation component 13 may take conventional form, and may include means to provide time-dependent potentials for example a series of pulses to be applied, and to command accordingly, and means to accept and hold time-dependent potentials, for example pulse-counters, and to interpret these.

## Claims

1. A computer memory device (10) for storing identified associations between data items of a data collection, said device (10) being characterised by the combination of

an array (15) of signal-flow pathways (1, 2, 3, etc.) which pathways are respectively representative of data items of said data collection,

controllable interconnect means (A, B, C, D, etc.) for selectively interconnecting said pathways (1, 2, 3, etc.) in one or more pairs and effecting directional control of signal flow between each interconnected pair in accordance with the identified associations between the respectively represented data items of said data collection,

and signal input/output means (18) connected to said array (15) for delivering an input signal to a selected pathway (1, 2, 3, etc.) representative of a selected data item and for receiving output signals from the pathways (1, 2, 3, etc.) interconnected therewith and representative of the data items of said data collection which have identified associations with said selected data item.

2. A device as claimed in claim 1, characterised in that each signal pathway (1, 2, 3, etc.) of said array (15) is interconnectable with each other pathway (1, 2, 3, etc.) therein by means of a said controllable interconnect means (A, B, C, D, etc.).

3. A device as claimed in claim 1, characterised in that each controllable interconnect means (A, B, C, D, etc.) is operable selectively to effect control of signal flow between interconnected pathways (1, 2, 3, etc.) in any one of the following states, namely, unidirectionally in one of two opposed directions, bidirectionally, and inhibit (disconnect).

4. A device as claimed in claim 1, characterised in that each controllable interconnect means (A, B, C, D, etc.) is operable in any one of a plurality of states which states are equal in number to the diffferent assocations which are possible between two data items and the status of each said interconnect means (A, B, C, D, etc.) is controlled by a multi-state control device (22) having an equal number of alternative states, said control device (22) forming part of a conventional computer memory (17) and being individually addressable therein by operator action in order to establish the control device (22) in a desired state and accordingly to establish the interconnect means (A, B, C, D, etc.) in the corresponding state.

5. A device as claimed in claim 4, characterised in that each interconnect means (A, B, C, D, etc.) has four states and each control device is formed by a pair of bi-state memory elements in a conventional random access memory (RAM) (17).

6. A device as claimed in claim 1, characterised in that each controllable interconnect means (A, B, C, D, etc.) is operable in any one of a plurality of states which states are less in number than the different associations which are possible between two data items and the status of each said interconnect means (A, B, C, D, etc.) is controlled by a multi-state control device (22) having an equal number of alternative states to those of the interconnect means (A, B, C, D, etc.), said control device (22) forming part of a conventional computer memory (17) and being individually addressable therein by operator action in order to establish the control device (22) in a desired state and accordingly to establish the interconnect means (A, B, C, D, etc.) in a corresponding state, the associations between two data items which are unobtainable by operation of the interconnect means (A, B, C, D, etc.) being provided by software control of the data items.

7. A device as claimed in claim 6, characterised in that there are four different possible associations between data items of which the association of identity is provided by software control of the data items and the remaining three associations are provided by the interconnect means (A, B, C, D, etc.) each of which has three states and the control device (22) is formed by a three state memory element of a random access memory (RAM) (17).

8. An associative memory characterised by a plurality of memory devices (10) each as claimed in claim 1, and wherein each device (10) has at least one of its signal pathways (1, 2, 3, etc.) externally directly connected to a signal pathway (1, 2, 3, etc.) in another of said memory devices (10).

9. A memory as claimed in claim 8 characterised in that each interconnect means (A, B, C, D, etc) comprises a signal level attenuator element, the quantum of attenuation being the same for each interconnect means (A, B, C, D, etc) in each of the computer memory devices (10) of the memory.

**Patentansprüche**

1. Computerspeicheranlage (10) zum Speichern von identifizierten Beziehungen zwischen Datenwörtern einer Datenerfassung, gekennzeichnet durch die Kombination folgender Merkmale:

ein Datenfeld (15) mit Signalflußstrecken (1, 2, 3 usw.), wobei diese Strecken jeweils den Datenwörtern dieser Datenerfassung entsprechen;

steuerbare Verbindungseinrichtungen (A, B, C, D usw.) zum wahlweisen Miteinanderverbinden dieser Strecken (1, 2, 3, usw.) zu einem oder mehreren Paaren zu Bewirkung einer Richtungssteuerung eines Signalflußes zwischen jedem in Verbindung stehenden Paar in Übereinstimmung mit den identifizierten Kennungen zwischen den jeweils dargestellten Datenwörtern der Datenerfassung; und

eine Signal Eingabe/Ausgabe Vorrichtung (18), welche mit einem Datenfeld (15) verknüpft ist, um ein Eingangssignal zu einer ausgewählten Strecke (1, 2, 3, usw.) weiterzuleiten, das einem ausgewählten Datenwort entspricht und zum Empfangen von Ausgangssignalen von den miteinander verbundenen Strecken (1, 2, 3 usw.), wobei die Ausgangssignale den Datenwörtern dieser Datenerfassung entsprechen, die eine identifizierte Beziehung mit dem ausgewählten Datenwort haben.

2. Anlage nach Anspruch 1, dadurch gekennzeichnet, daß jede Signalstrecke (1, 2, 3 usw.) des Datenfeldes (15) mit jeder anderen Strecke (1, 2, 3, usw.) mittels den steuerbaren Verbindungseinrichtungen (A, B, C, D, usw.) verbindbar ist.

3. Anlage nach Anspruch 1, dadurch gekennzeichnet, daß jede der steuerbaren Verbindungseinrichtungen (A, B, C, D, usw.) wahlweise betätigbar ist, um eine Steuerung eines Signalflußes zwischen den miteinander verbundenen Strekken (1, 2, 3, usw.) in irgendeinen der folgenden Zustände zu bewirken, nämlich einseitig gerichtet in eine von zwei entgegengesetzten Richtungen, doppelseitig und gesperrt (Trennstelle).

4. Anlage nach Anspruch 1, dadurch gekennzeichnet, daß jede der steuerbaren Verbindungseinrichtungen (A, B, C, D usw.) in jedem einer Vielzahl zon Zuständen betätigbar ist, wobei die Anzahl der Zustände den verschiedenen Beziehungen entspricht, die zwischen zwei Datenwörtern möglich sind und daß der Zustand einer jeden Verbindungseinrichtung (A, B, C, D usw.) durch eine Multizustandssteueranlage (22) steuerbar ist und die Anlage eine gleiche Anzahl von alternativen Zuständen aufweist, wobei die Steueranlage (22) einen Teil eines herkömmlichen Computerspeichers (17) bildet und individuell von außen adressierbar ist, um die Steueranlage (22) in einen gewünschten Zustand zu versetzen und um die Verbindungseinrichtungen (A, B, C, D usw.) in den entsprechenden Zustand zu versetzen.

5. Anlage nach Anspruch 4, dadurch gekennzeichnet, daß jede der Verbindungseinrichtungen (A, B, C, D usw.) über vier Zustände verfügt und daß jede Steueranlage durch ein Paar von Doppelzustandsspeicherelementen in einem herkömmlichen Speicher mit wahlfreiem Zugriff (RAM) (17) gebildet ist.

6. Anlage nach Anspruch 1, dadurch gekennzeichnet, daß jede der steuerbaren Verbindungseinheiten (A, B, C, D, usw.) in jedem der Vielzahl von Zuständen betätigbar ist, wobei die Anzahl der Zustände kleiner ist als die Anzahl der verschiedenen Beziehungen, die zwischen zwei Datenwörtern möglich sind und daß der Zustand einer jeden Verbindungseinrichtung (A, B, C, D, usw.) durch eine Multizustandssteueranlage (22) steuerbar ist und die Anlage eine gleiche Anzahl von alternativen Zuständen aufweist, die der Anzahl der Zustände der Verbindungseinrichtungen (A, B, C, D usw.) gleich ist, wobei die Steueranlage (22) einen Teil eines herkömmlichen Computerspeichers (17) bildet und individuell von außen adressierbar ist, um die Steueranlage (22) in einen gewünschten Zustand zu versetzen und um die Verbindungseinrichtungen (A, B, C, D usw.) in den entsprechenden Zustand zu versetzen, wobei die Beziehungen zwischen zwei Datenwörtern, die durch Betätigung der Verbindungseinrichtungen (A, B, C, D usw.) nicht erreichbar sind, durch Programmsteuerung der Datenwörter bereitgestellt werden.

7. Anlage nach Anspruch 6, dadurch gekennzeichnet, daß es vier verschieden mögliche Beziehungen zwischen den Datenwörtern gibt, bei welchen die Beziehung der Identität durch Programmsteuerung der Datenwörter bereitgestellt wird und die verbleibenden drei Beziehungen durch die Verbindungseinheiten (A, B, C, D usw.) bereitgestellt werden, von denen jede drei Zustände hat und die Steueranlage (22) durch ein Speicherelement mit drei Zuständen eines Speichers mit wahlfreiem Zugriff (RAM) (17) gebildet wird.

8. Assoziativspeicher gekennzeichnet durch eine Vielzahl von Speicheranlagen (10), insbesondere durch Speicheranlagen nach Anspruch 1, wobei jede Anlage (10) wenigstens eine der Signalstrekken (1, 2, 3 usw.) nach außen hin besitzt und direkt mit einer Signalstrecke (1, 2, 3 usw.) einer anderen Speicheranlage (10) verbunden ist.

9. Speicher nach Anspruch 8, dadurch gekennzeichnet, daß jede der Verbindungseinrichtungen (A, B, C, D usw.) eine Signalhöhenabschwächungsvorrichtung aufweist, wobei die Stärke der Abschwächung für jede der Verbindungseinrichtungen (A, B, C, D usw.) in jedem der Computerspeicheranlagen (10) des Speichers gleich ist.

**Revendications**

1. Dispositif à mémoire de calculatrice pour mémoriser des associations identifiées entre éléments de données d'une collection de données, le dispositif (10) étant caractérisé par la combinaison de:

un réseau (15) de trajets (1, 2, 3, etc.) de circulation de signal, ces trajets étant respectivement représentatifs d'éléments de données de ladite collection de données,

des moyens d'interconnexion commandables (A, B, C, D, etc.) pour interconnecter sélectivement lesdits trajets (1, 2, 3, etc.) en une paire ou plusieurs et pour effectuer une commande directionnelle de circulation de signal entre chaque paire interconnectée suivant les associations identifiées entre les éléments de données respectivement représentés de ladite collection de données,

et des moyens d'entrée/sortie de signal (18) reliés audit réseau (15) pour fournir un signal d'entrée à un traject sélectionné (1, 2, 3, etc.) représentant un élément de données sélectionné et pour recevoir des signaux de sortie provenant des trajets (1, 2, 3, etc.) interconnectés par lui et représentant les éléments de données de ladite collection de données qui ont des associations identifiées avec ledit élément de données.

2. Dispositif selon la revendication 1, caractérisé en ce que chaque trajet de signal (1, 2, 3, etc.) dudit réseau (15) est interconnectable avec chacun des autres trajets (1, 2, 3, etc.) par l'intermédiaire d'un desdits moyens d'interconnexion commandables (A, B, C, D, etc.).

3. Dispositif selon la revendication 1, caractérisé en ce que chaque moyen d'introduction commandable (A, B, C, D, etc.) est actionnable sélectivement pour réaliser la commande de circulation de signal entre des trajets interconnectés (1, 2, 3, etc.) dans l'un quelconque des états suivants, à savoir, de façon unidirectionnelle dans une direction ou deux directions opposées, de façon bidirectionnelle, et avec inhibition (déconnection).

4. Dispositif selon la revendication 1, caractérisé en ce que chaque moyen d'interconnexion commandable (A, B, C, D, etc.) est actionnable dans l'un quelconque de plusieurs états, en nombre égal aux différentes associations possibles entre deux éléments de données, et le statut de chacun desdits moyens d'interconnexion (A, B, C, D, etc.) est commandé par un dispositif de commande à plusieurs états (22) ayant un nombre égal d'états possibles, ledit dispositif de commande (22) appartenant à une mémoire de calculatrice classique (17) et ayant une capacité d'adressage interne individuel par action d'un opérateur de façon à mettre le dispositif de commande (22) dans un état désiré et un conséquence à mettre les moyens d'interconnexion (A, B, C, D, etc.) dans l'état correspondant.

5. Dispositif suivant la revendication 4, caractérisé en ce que chaque moyen d'interconnexion (A, B, C, D, etc.) a quatre états et en ce que chaque dispositif de commande est constitué par une paire d'éléments de mémoire à deux états dans une mémoire à accès aléatoire classique (MEV) (17).

6. Dispositif suivant la revendication 1, caractérisé en ce que chaque moyen d'interconnexion commandable (A, B, C, D, etc.) est amenable dans l'un quelconque de plusieurs états, ces états étant en nombre inférieur aux différentes associations qui sont possibles entre deux éléments de données et le statut de chacun desdits moyens d'interconnexion (A, B, C, D, etc.) est commandé par un dispositif de commande à plusieurs états (22) ayant un nombre d'états possible égal à celui des moyens d'interconnexion (A, B, C, D, etc.) ledit dispositif de commande (22) faisant partie d'une mémoire de calculatrice classique et ayant une capacité d'adressage interne individuel par action d'un opérateur de façon à mettre le dispositif de commande (22) dans un état désiré et en conséquence à mettre les moyens d'interconnexion (A, B, C, D, etc.) dans un état correspondant, les associations entre deux éléments de données qui ne peuvent pas être obtenues par l'intervention des moyens d'interconnexion (A, B, C, D, etc.) étant fournies par commande logicielle des éléments de données.

7. Dispositif suivant la revendication 6, caractérisé en ce qu'il y a quatre associations possibles différentes des éléments de données, l'association d'identité étant effectuée par commande logicielle des éléments de données tandis que les trois autres associations sont effectuées par les moyens d'interconnexion (A, B, C, D, etc.) dont chacun a trois états et le dispositif de commande (22) est constitué par un élément à mémoire à trois états d'une mémoire à accès aléatoire (MEV) (17).

8. Mémoire associative caractérisée par plusieurs dispositifs à mémoire (10) chacun tel que défini dans la revendication 1, et dans laquelle chaque dispositif (10) a au moins l'un de ses trajets de signaux (1, 2, 3, etc.) directement relié de façon externe à un trajet de signal (1, 2, 3, etc.) dans un autre desdits dispositifs à mémoire (10).

9. Mémoire suivant la revendication 8, caractérisée en ce que chaque moyen d'interconnexion (A, B, C, D, etc.) comprend un élément d'atténuation de niveau de signal, le quantum d'atténuation étant le même pour chaque moyen d'interconnexion (A, B, C, D, etc.) dans chacun des dispositifs de mémoire de calculatrice (10) de la mémoire.

FIG. 1

FIG. 2

A. TWO-MODE

B. FOUR-MODE

C. THREE-MODE with
only one uni-directional
flow means

FIG. 3

3

Key:

V (diode) switched connection

+ (wired) permanent connection

read V as

FIG. 4

Full interconnection of 4 X 4 - by - 4
to give equivalent of 1 X 8 - by - 8

Key:
O - diode
● - connector

## FIG. 5

## FIG. 6

FIG.7

FIG.8

FIG. 9